Europäisches Patentamt

European Patent Office

Office européen des brevets

(11) Publication number : **0 503 920 A2**

# (12) EUROPEAN PATENT APPLICATION

(21) Application number : 92302073.9

(22) Date of filing : 11.03.92

(51) Int. Cl.⁵ : **G06F 11/22**

(30) Priority : **11.03.91 GB 9105099**

(43) Date of publication of application :
**16.09.92 Bulletin 92/38**

(84) Designated Contracting States :
**DE FR GB**

(71) Applicant : **GRANADA COMPUTER SERVICES (U.K.) LIMITED**
**International Technical Support, Unit 1-3,**
**Block C, Eskdale Road**
**Winnersh, Berkshire RG11 5LW (GB)**

(72) Inventor : **Spencer, Christopher John**
**51 Beedon Drive, Great Hollands**
**Bracknell, Berkshire (GB)**

(74) Representative : **Maury, Richard Philip**
**Marks & Clerk 57-60 Lincoln's Inn Fields**
**GB-London WC2A 3LS (GB)**

(54) **Apparatus and system for providing diagnostic support to one or more computer systems.**

(57) A system is disclosed which includes an apparatus (6) for providing diagnostic support to one or more computer systems (2) from a host system (8). Diagnostic data from a problematic local computer system (2) is passed to the host system (8) for analysis and diagnostic support is multiplexed back to the local computer system via a remote support processor (6). All transfer of data to and from each local computer system is controlled by said apparatus and is logged by a respective local console for security.

This system and apparatus enables problems on a local computer system to be identified and diagnosed more quickly thereby minimising the time when any local computer system may be down.

FIG.1

The present invention relates to an apparatus for enabling diagnostic support to be given to one or more computer systems from a remote host systems and a system for providing diagnostic support to one or more computer systems.

Once a computer system has been installed, it is always necessary to provide technical assistance and back-up support to ensure that the computer system remains operational. Hitherto, such technical assistance and diagnostic support has been provided by engineers being contacted by an operator of the computer system, when a problem is anticipated or has already occurred.

Diagnostic support in this context means any way of discovering the cause of the computer system problem. It includes manually looking at computer system error reports, automatically looking at system error reports using commercial software and running special diagnostic programs.

In most cases, it is necessary for the engineer to visit the installed computer system to diagnose the problem. Then, the engineer may require the services of a specialist or obtain spare parts to replace faulty parts in order to get the computer system operational again. In some cases, the problem could be solved by the operator at the computer system but in order to diagnose the problem, usually it is necessary for the engineer to attend the installed computer system.

This back-up service has been found to be extremely time consuming, inefficient and expensive. In most computer installations, it is extremely important that the computer system remains operational and it is imperative to ensure that the time spent when a computer system is down is kept to a minimum.

An aim of the present invention is to create an apparatus for enabling diagnostic support to be given to one or more local computer systems from a remote host computer system. This enables a problem associated with one of the local computer systems to be identified and the host system diagnose the problem and propose suitable solutions more quickly than done before.

Another aim of the present invention is to provide a system for providing diagnostic support to one or more local computer systems from a remote host computer thereby obviating the above disadvantages.

Also according to the present invention there is provided an apparatus for enabling diagnostic support to be given to one or more local computer systems from a remote host computer system, comprising:

means for passing data between each of said local computer systems and a respective local console even when there is no power to the apparatus;

means for controlling diagnostic data being passed between said local computer system and the respective local console and between each said local computer system and said host system;

whereby diagnostic data from any one of said local computer system can be passed to the host system and local console for processing and diagnostic support can be passed back from the host computer to the problematic local computer system and logged on the respective local console.

This apparatus enables a problem of one of the local computer systems to be identified and diagnostic data to be passed to the host system for diagnosis and proposal of a solution. Consequently, the time spent on any computer system being down can be dramatically minimised over known support arrangements.

According to the present invention there is provided a system for providing diagnostic support to one or more local computer systems comprising:

a remote host system being provided with diagnostic software;

one or more local consoles also being provided with diagnostic software; and

a central console for coupling each local console to the respective local computer system, said central console being coupled to said host system;

whereby diagnostic data from any one of said local computer systems can be passed to the host system and local console for processing and diagnostic support from said host computer can be passed back to the local computer system and logged for analysis on the respective local console.

This enables the identification of a problem, diagnosis and proposal of solutions to be implemented more quickly. Furthermore, diagnosis of the problem can begin even before an engineer is sent out to the installed computer system. If necessary, the need for a specialist can be identified more quickly and sent out to the installed computer system more quickly. Similarly, if new parts are necessary, these can be ordered and even sent with an engineer to the installed computer system.

Embodiments of the present invention will now be described with reference to the following drawings, of which:

figure 1 is a schematic diagram of a system according to the preferred embodiment;

figure 2 is a schematic diagram illustrating four modes of operation of an apparatus according to the preferred embodiment;

figure 3 is a schematic block diagram of the apparatus of the preferred embodiment;

figure 4 is a schematic block diagram of a connector card of the apparatus of the preferred embodiment;

figure 5 is a schematic block diagram of a front panel of the apparatus; and

figure 6 is a schematic block diagram of a CPU of the apparatus.

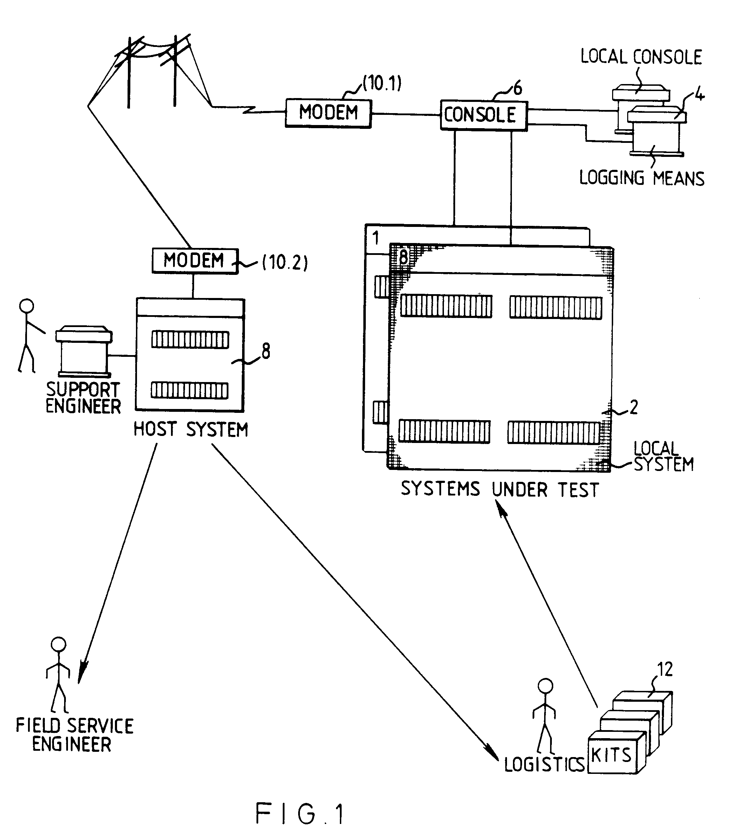

With reference to figure 1, the system of the preferred embodiment enables diagnostic support to be provided to one or more local computer systems (2).

Each local computer system (2) is coupled to a respective local console (4) via an apparatus (6) known as a remote support processor. The remote support processor (6), local consoles (4) and local computer systems (2) are all installed on site at a particular client's location.

The remote support processor (6) in the preferred embodiment can support up to eight local computer systems at any one time. However, only one diagnostic session concerning one local computer system can take place at any one time.

The system enables diagnostic data about any one of the local computer system (2) to be sent to a host system (8) through one or more modems (10). The host system (8) is installed at a remote location to that of the remote support processor (6), local consoles (4) and local computer systems (2). The remote support processor is provided as a buffer between the host system (8) and the local computer systems (2) which is a necessity when the systems (2), (8) have different baud rates.

The diagnostic data may be sent by telephone, satellite, cable transmission or any other telecommunication method. In the preferred embodiment the diagnostic data is sent via a first modem (10.1) on a telephone link and then to the host computer via a second modem (10.2).

Both the host computer and each local console (4) have diagnostic software and command files for identifying and diagnosing a problem on a local computer system (2). In this system of the present invention, any problem with a particular local computer system can be identified, diagnostic data can be collated and passed to the host system and the respective local console for diagnoses and the proposal of suitable solutions.

The local console logs all data being sent to and from the respective local computer system for security reasons and enables on site diagnosis and implementation of solutions. In general, diagnostic data from the local computer systems is sent in a diagnostic session to the host computer system and such is analysed thereby, all in real time. However, if the connection between the host system and the remote support processor is lost, then all output from the local system is recorded in the memory of the remote support processor. At a later date the connection can be re-made and all output from the local system which occured can be recovered by the host computer. Consequently, the host system (8) has the capabililty of down-loading and up-loading diagnostic data and recording the diagnostic session for any particular local computer system for later off-line evaluation.

If possible, the solution to the problem is found by the host computer and passed back to the respective local computer system without an engineer even attending the site. If the solution is not that simple, an engineer or specialist engineer can be found and sent to the site of the local computer system without delay. The engineer can then use the local console in association with the host computer to find and implement a solution. Furthermore, if required, spare parts (12) can be ordered and sent to the installed local computer system without any further delay.

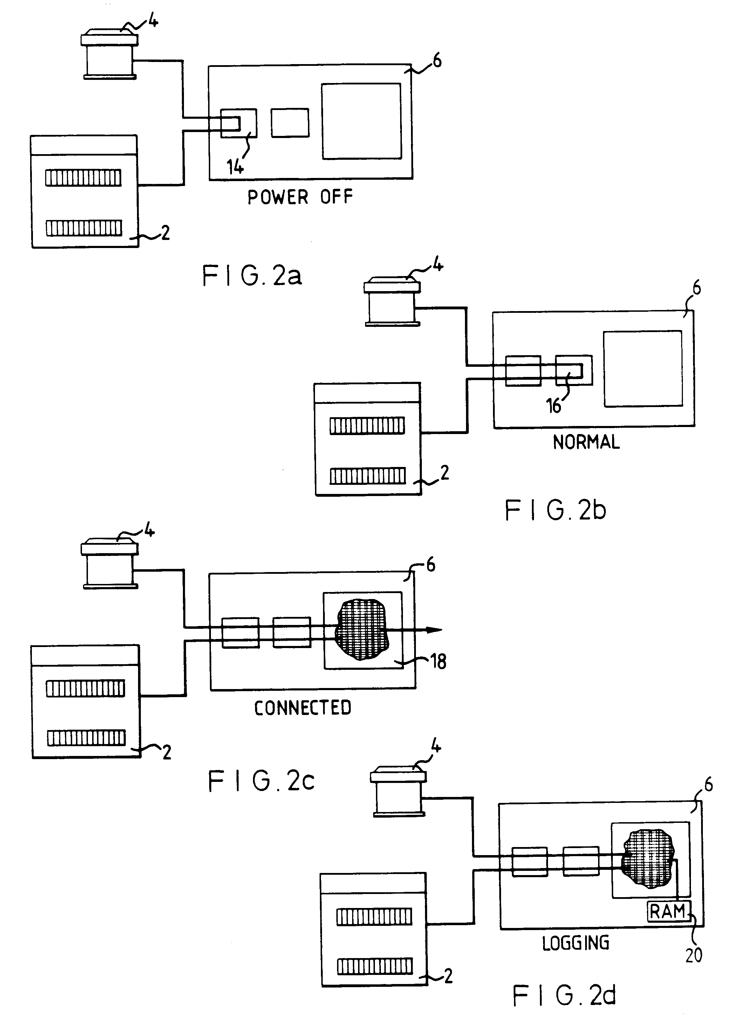

With reference to figure 2, the remote support processor (6) has at least four modes or operation. These are as follows:

(a) When no power is connected to the remote support processor (6), data is passed between each local computer system (2) and the respective local console (4) via relays (14).

(b) When power is provided to the remote support processor (6) and there is no problem with any local computer system (2), data is passed between the local computer system and its respective local console via electronic switches (16).

(c) When a problem does exist with one of the local computer systems, data is passed from the local computer system to both the host system (8) via the modems (10) and to the respective local console (4). Diagnostic support is multiplexed and passed back from the host system (8) to the problematic local computer system (2) and is logged on the local console (4). The flow of data and diagnostic support is controlled by a CPU (18).

(d) If communication between the remote support processor (6) and the host computer is lost as discussed above then further diagnostic data from the local computer system is stored in a memory (20). This enables the diagnostic session to be initiated and then the connection with the host system (8) to be disconnected and at a later time when the connection is re-established, the results of the diagnostic session can be reviewed by the host computer.

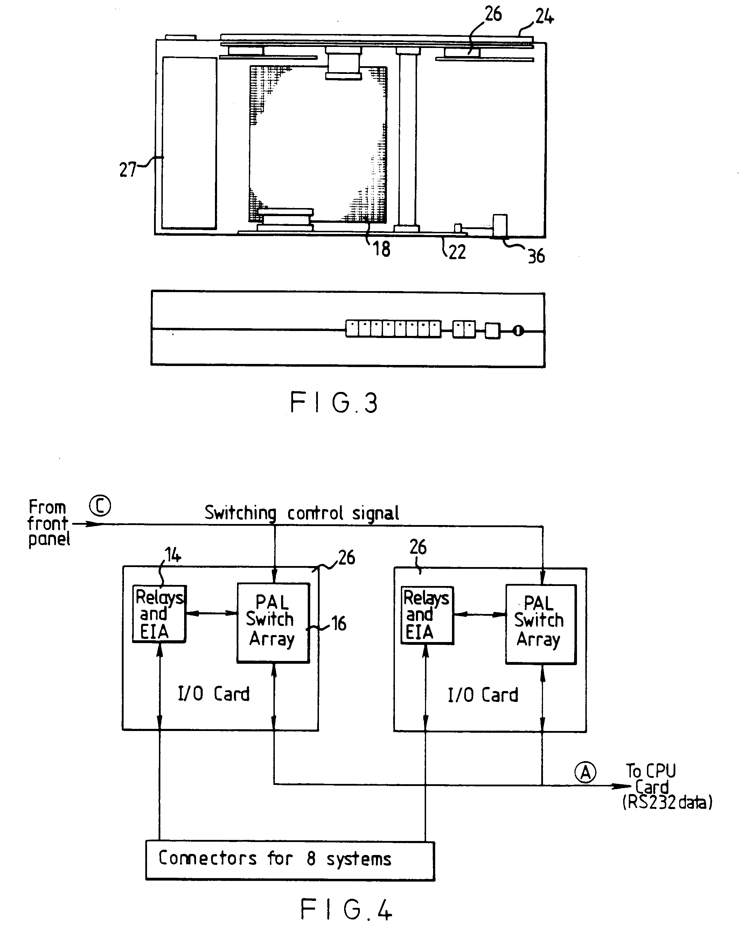

The remote support processor (6) is a single unit which may be a free-standing unit or rack mounted. In any case, as shown in figure 3, each remote support processor (6) comprises a front panel (22), the CPU (18), a distribution panel (24) and two input-output (I/O) connector cards (26). In the preferred embodiment, the I/O connections comprise RS232L ports. The remote support processor is also provided with a power supply (27).

The distribution panel (24) contains all the 25 way 'D' type connectors for coupling the remote support processor (6) up to a maximum of eight local consoles (4), eight local computer systems (2) and the modem (10.1). The distribution panel (24) is also connected to the two identical I/O connections (26).

Each I/O connection, as shown in figure (4), comprises the relay (14) and electronic switch (16). In the preferred embodiment, the electronic switches comprise custom programmed PAL devices.

As discussed previously with respect to figure 2, when no power is connected to the remote support processor (6), data between the local computer systems and the respective local consoles is passed via the relays (14). When the remote support processor has power and the local computer systems are functioning normally, data between the local console and the local computer systems is passed via the electronic switches (16).

The CPU (18) controls the flow of data through the I/O connections (26). The operation of the remote support processor is also dictated by the settings on the front panel (22).

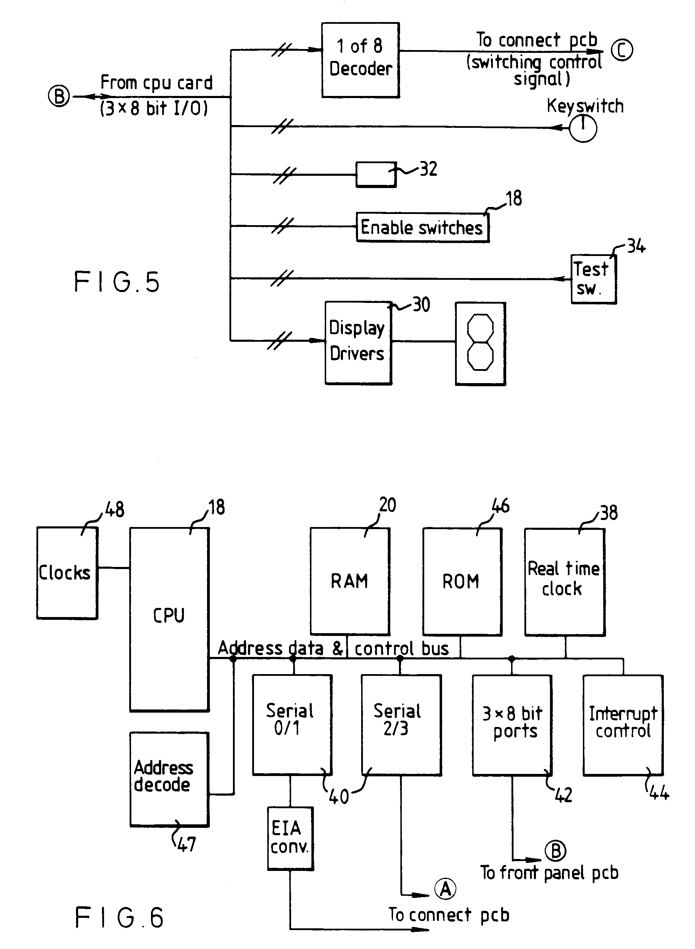

With reference to figure 5, the front panel (22) includes eight port disable switches (28), a display (30), a test switch (34) and a reset switch (32); and is coupled to a key switch (36) which has three position, test, enable or disable.

The eight port disable switches (28) enable an operator to select which one of the eight local computer systems are coupled to the remote support processor (6). The particular number of the chosen local computer system is then displayed on the display (30). Other information such as status messages may be displayed on the display as follows:

Status messages

U. The remote support processor is re-initialising one of the modems which has defaulted to factory setups.

L. The keyswitch (36) is in the disabled position and so modem (10.1) will not automatically answer and non of the local computer systems can be accessed.

Z. The keyswitch (36) is in the test or enabled position and is waiting for the host computer to connect. This symbol is shown whenever no telephone line connection is made.

C&P. This indicates that a connection has been established and the remote support processor may be commanded but no diagnostic session is currently active.

C&-. A valid logon sequence has been entered and the remote support processor may be commanded but no diagnostic session is currently active.

C&7. This host computer is connected to a system but no diagnostic session is in progress (e.g. port 7). The local computer system and local console are under control of the remote support processor and the local console should only be used under the direction of the host computer.

*&7. This indicates that a diagnostic session (e.g. port 7) is in progress. All data transmitted to the host system except passwords, is echoed to the local console for system security. The local console may be used at this time in co-operation with the host computer.

E&5. Error display. The remote support processor has detected a fatal error. The remote support processor must be reset to clear this error.

The function of the keyswitch is as follows:

Disable - all remote access from the host computer to the remote support processor is prevented, and the modem will not answer an incoming call. If the switch is turned to this position during a diagnostic session the session will be terminated. This is the only recommended way of aborting an unauthorised session.

Test - the test switch enables the host computer to access the remote support processor but stops any access to the local computer systems even if the port switches are enabled. This can thus be used to periodically test the remote support processor remotely. Furthermore, this position on the keyswitch allows connection to the remote support processor by the host computer to perform such functions as setting the time and date, but it will not allow the host to connect to any of the local systems, even though the port switches may be enabled.

Enable - this allows access to all the local computer systems which have the port buttons enabled. This position should only be used when a diagnostic session is requested.

The reset switch will restart the remote support processor, any diagnostic session in progress will be abnormally terminated. If pressed it may leave the system under test in an indeterminte state. The keyswitch in the disable position should be used to abort an unauthorised session.

The test switch if pressed will allow the remote support processor to perform a more extensive self test. All the functions of the remote support processor will be as normal EXCEPT NO PASSWORD CHECKING WILL OCCUR. This mode is designed to enable a user to access his own systems if required.

Selection of the various functions on the front panel (22) are used by the CPU (18) to control its operation.

With reference to figure 6, the CPU comprises a microprocessor (37) supported by a real time clock (38), four asynchronous communication lines (40) which are coupled to the I/O connections (16), an I/O port (42) for receiving information from the front panel (22), an interrupt means (44), memory (20) another memory (46), and an address decoder means (47). In the preferred embodiment, the memory (20) comprises two random access memory chips of 32Kb, memory (46) is provided by two 64Kb EPROMS and address decoder means (47) comprises a PAL16L8 field programmable logic array.

The microprocessor (37) is driven by a clock (48). In the preferred embodiment, the clock comprises an 8284 clock driver chip and a 22.1184 Mhz crystal. This clock driver also provides the reset line to the microprocessor (37) and other peripheral chips of the CPU (18).

No wait states are used in the CPU (18) so that the ready lines of the clock driver chip are tied high.

All the components coupled to the microprocessor (37) are fast enough to conform to the minimum set up and hold time require in the system. The power on the reset line of the clock driver chip is held low on power up until the power supply (27) has stablised. Stablising the power supply is achieved, as is usual, by an RC combination (not shown). In addition, as is usual, a battery back up switch i.c. output (not shown) is coupled to the reset line so as to hold the reset line low until the power supply (27) exceeds the voltage of the back up battery.

The CPU (18) of the remote support console (6) is used to control data being passed between the local computer system and its respective local console and between the local computer system and the host computer. To achieve this, the microprocessor (37) of the CPU (18) maintains several ring buffers in the RAM (20).

A second embodiment of the present invention comprises a remote support processor for enabling diagnostic support to be given to only one local computer system. This remote support processor is a modification of the above described remote support processor and has several capabilities over and above it. For example, the remote support processor of the second embodiment is permanently connected to the local system and so can be dedicated to monitor that single system and the following advantages can be realised .

1. It can automatically enter the time and date on the local system after an unattended power fail or system crash. This is done by the CPU having'means for recognising power down and then writing the time and date from the real time clock. Consequently, the system is then operational again and the time spent down is at a minimum.

2. The remote support processor can detect user defined error messages and notify a local console and also call or dial several pre-defined remote locations (i.e. Pager service, software support, or engineers).

3. The local or remote operator can review the last 32000 characters sent from the local system stored in the remote support processor.

The aforegoing description has been given by way of example only and modifications of the present invention is made without departing from the scope of the present invention.

**Claims**

1. An apparatus for enabling diagnostic support to be given to one or more local computer systems from a remote host computer system, comprising:
   means for passing data between each of said local computer systems and a respective local console even when there is no power to the apparatus;

   means for controlling diagnostic data being passed between said local computer system and the respective local console and between each said local computer system and said host system;

   whereby diagnostic data from any one of said local computer system can be passed to the host system and local console for processing and diagnostic support can be passed back from the host computer to the problematic local computer system and logged on the respective local console.

2. An apparatus as claimed in claim 1, in which said means for passing data comprises one or more relays and one or more electronic switches.

3. An apparatus as claimed in claim 1 or claim 2, further comprising a memory for storing diagnostic data when said apparatus is disconnected from said host system.

4. An apparatus as claimed in any one of claims 1 to 3, further comprising means for inputting commands to the apparatus, in which said input means comprises eight switches for enabling a user to select an particular local computer system, a test switch, a reset switch and a key switch.

5. An apparatus as claimed in claim 4, further comprising a display for displaying commands input to the apparatus and the number of the local computer system chosen by user.

6. An apparatus as claimed in claim 4 or 5, in which said key switch controls access from the host computer to the apparatus and to the local computer system.

7. A system for providing diagnostic support to one or more local computer systems comprising:
   a remote host system being provided with diagnostic software;

   one or more local consoles also being provided with diagnostic software; and

   a central console for coupling each local console to the respective local computer system, said central console being coupled to said host system;

   whereby diagnostic data from any one of said local computer systems can be passed to the host system and local console for processing and diagnostic support from the host computer can be passed back to the local computer system and logged for analysis on the respective local console.

8. A system has claimed in claim 7, further comprising one or more modems for coupling the central console to said host system.

9. A system as claimed in claim 7 or claim 8, in which said system provides diagnostic support to eight local computer systems whereby said host system receives diagnostic data and provides diagnostic support to only one local computer system at any one time.

10. A system as claimed in any one of claims 7 to 9, in which said host system includes means for down loading and up loading diagnostic data and means for recording the diagnostic session for one of said local computer systems for later off-line evaluation.

11. A system as claimed in any one of claims 7 to 10 including an apparatus as claimed in any one of claims 1 to 6.

FIG.1

FIG.2a

POWER OFF

FIG.2b

NORMAL

FIG.2c

CONNECTED

FIG.2d

LOGGING

RAM

F I G. 3

F I G. 4

9

FIG.5

FIG.6